# NEUE EUROPÄISCHE PATENTSCHRIFT

(11) **EP 2 350 488 B2**
(45) Veröffentlichungstag und Bekanntmachung des Hinweises auf die Entscheidung über den Einspruch: **11.11.2020**
(45) Hinweis auf die Patenterteilung: 10.01.2018
(21) Anmeldenummer: 09753049.7
(22) Anmeldetag: 16.11.2009
(51) Int. Cl.: F16D 65/097, F16D 65/095

(54) **SCHEIBENBREMSE UND BREMSBELAGANORDNUNG HIERFÜR**
DISK BRAKE AND BRAKE PAD ARRANGEMENT THEREFOR
FREIN À DISQUE ET AGENCEMENT CORRESPONDANT DES GARNITURES DE FREINAGE

(30) Priorität: 20.11.2008 DE 102008058265
(43) Veröffentlichungstag der Anmeldung: 03.08.2011
(73) Patentinhaber: ZF Active Safety GmbH, 56070 Koblenz (DE)
(72) Erfinder: ZENZEN, Guido, 56290 Macken (DE); BECKER, Marco, 56651 Oberdürenbach (DE); SCHOG, Michael, 56753 Mertloch (DE); RÖSSINGER, Florian, 56566 Neuwied (DE)
(86) Internationale Anmeldenummer: PCT/EP2009/008150
(87) Internationale Veröffentlichungsnummer: WO 2010/057608

(56) Entgegenhaltungen:
- EP-A1- 0 563 555
- EP-A1- 0 851 139
- EP-B1- 1 700 047
- EP-B1- 2 274 532
- WO-A1-2007/062420
- DE-A1- 4 240 872
- DE-A1- 4 304 616
- DE-A1- 4 332 709
- DE-A1- 10 159 504
- DE-A1- 10 312 479
- DE-C1- 4 318 744
- FR-A1- 2 371 606
- FR-A1- 2 735 195
- GB-A- 2 434 624
- JP-A- 9 042 337
- US-A- 5 577 577

## Beschreibung

Die vorliegende Erfindung betrifft eine Scheibenbremse für eine Kraftfahrzeugbremsanlage mit einem rahmenartigen Gehäuse, wenigstens zwei in dem rahmenartigen Gehäuse aufgenommenen Bremsbelaganordnungen, zwischen denen eine um eine Drehachse drehbare Bremsscheibe aufnehmbar ist, und wenigstens zwei Führungsbolzen, die an dem Gehäuse angebracht sind und an denen wenigstens eine der Bremsbelaganordnungen mit Spiel in axialer Richtung verlagerbar geführt ist. Derartige Scheibenbremsen sind aus dem Stand der Technik bekannt.

So beschreibt beispielsweise das Dokument JP9042337 oder DE 103 12 479 A1 eine Scheibenbremse, bei der Bremsbelaganordnungen auf Führungsbolzen verlagerbar geführt sind. Eine der Bremsbelaganordnungen wird über einen Betätigungskolben in dem Gehäuse verlagert. Die gesamte Scheibenbremse funktioniert nach dem Schwimmsattelprinzip. Zum Positionieren von Bremsbelaganordnungen innerhalb eines Gehäuses einer Scheibenbremse ist es ferner üblich, Niederhaltefedern für die Bremsbelaganordnungen zu verwenden. Eine derartige Niederhaltefederanordnung ist aus dem Dokument DE 199 35 036 C1 bekannt. Bei diesem Dokument werden einzelne Bremsbelaganordnungen im Gehäuse über eine bügelförmig ausgebildete Niederhaltefeder in radialer Richtung bezüglich der Drehachse der Scheibenbremse nach unten auf die Führungsbolzen gedrückt. Die Führungsbolzen durchsetzen dabei Ausnehmungen in den Bremsbelaganordnungen mit Spiel. Dabei hat sich jedoch gezeigt, dass sich in Abhängigkeit von der Größe des auf den jeweiligen Bremsbelag wirkenden Bremsmoments die Bremsbelaganordnung relativ zu den Führungsbolzen im Rahmen des vorhandenen Spiels verlagern kann. In der Folge kommt es zu einem Phänomen, bei dem bei niedrigen Bremsmomenten die jeweilige Bremsbelaganordnung von oben auf die Führungsbolzen über die Niederhaltefeder aufgedrückt und in Kontakt mit diesen gehalten werden. Sobald allerdings das Bremsmoment zunimmt und ein sich daraus ergebendes Kippmoment bezüglich der Führungsbolzen auf die jeweilige Bremsbelaganordnung einwirkt, kommt es zu einem Zustand, bei dem die von der Niederhaltefeder auf die jeweilige Bremsbelaganordnung ausgeübten Kräfte überwunden werden und so die jeweilige Bremsbelaganordnung verkippt. Schließlich verkippt die Bremsbelaganordnung im Rahmen des Spiels zwischen Führungsbolzen und Führungsbolzenausnehmung der Bremsbelaganordnung so weit, dass die Ausnehmung mit ihrem Rand wieder am Führungsbolzen anschlägt. Dieses Anschlagen kann zu einem unerwünschten Geräusch führen, das vom Fahrer des Fahrzeugs wahrgenommen und wird ihm den Eindruck einer Fehlfunktion des Bremssystems vermitteln kann. Gleiches gilt auch für den Fall, wenn die Bremse freigegeben wird, so dass das Bremsmomerit mehr oder weniger abrupt abgebaut wird und aufgrund der Wirkung der Belaghaltefeder sich die jeweilige Bremsbelaganordnung wieder in ihre Ausgangsstellung zurückbewegt. Wiederum erfolgt die Relativbewegung im Rahmen des Spiels zwischen Führungsbolzen und Führungsbolzenausnehmung in der Bremsbelaganordnung, wobei es schließlich erneut zu einem geräuschinduzierenden hörbaren Anschlagen des Führungsbolzens an der Führungsbolzenausnehmung kommt.

Es ist Aufgabe der vorliegenden Erfindung, eine Scheibenbremse der eingangs bezeichneten Art bereitzustellen, bei der derartige unerwünschte Geräusche wirkungsvoll unterbunden werden.

Diese Aufgabe wird durch eine Scheibenbremse der eingangs bezeichneten Art gelöst, bei der vorgesehen ist, dass an der auf den Führungsbolzen geführten Bremsbelaganordnung wenigstens ein Federmittel angebracht ist, das diese Bremsbelaganordnung relativ zu den Führungsbolzen in eine einer Kippbewegung, die beim Abbremsen der Bremsscheibe aus einem an der Bremsbelaganordnung angreifenden Bremsmoment resultiert, entsprechende Stellung vorspannt.

Erfindungsgemäß ist demnach vorgesehen, dass die Bremsbelaganordnung über das wenigstens eine Federmittel entsprechend vorgespannt wird, so dass es zu keiner Relativbewegung und auch zu keinem abrupten geräuschinduzierenden Anschlagen in Folge des anwachsenden oder bei Freigabe der Bremse abnehmenden Bremsmoments kommen kann. Dadurch werden störende Geräusche, die durch ein derartiges Anschlagen bedingt sind, wirkungsvoll unterbunden.

Gemäß einer Weiterbildung der Erfindung kann vorgesehen sein, dass die Bremsbelaganordnung wenigstens einen Bremsbelagträger und einen auf der der Bremsscheibe zugewandten Seite des Bremsbelagträgers angeordneten Bremsbelag aufweist, wobei das wenigstens eine Federmittel auf der vom Bremsbelag abgewandten Seite des Bremsbelagträgers angeordnet ist. Es versteht sich, dass erfindungsgemäß auch mehrere Federmittel an dem Bremsbelagträger ausgebildet sein können. Der Bremsbelagträger kann seinerseits beispielsweise aus einem plattenförmigen Metallelement hergestellt sein, in dem die Führungsbolzenausnehmungen zum Aufnehmen der Führungsbolzen ausgebildet sein können.

Erfindungsgemäß kann vorgesehen sein, dass die Bremsbelaganordnung auf den Führungsbolzen über ein verlagerbares Stellglied verlagerbar ist, wobei das wenigstens eine Federmittel an dem Stellglied angreift. In diesem Zusammenhang kann vorgesehen sein, dass das Stellglied wenigstens einen stirnseitig hohl ausgebildeten Bremskolben aufweist, in den das wenigstens eine Federmittel eingreift. Dadurch kann der in dem Bremskolben ausgebildete Hohlraum wirkungsvoll für die Unterbringung des wenigstens einen Federmittels ausgenutzt werden.

Eine bevorzugte Ausführungsvariante der Erfindung sieht vor, dass das Federmittel die Bremsbelaganordnung in verschiedenen Richtungen, beispielsweise sowohl in radialer Richtung als auch in Umfangsrichtung bezüglich der Drehachse vorspannt. Vorzugsweise ist dabei die Richtung der Spannwirkung der Federmittel derart gewählt, dass sie die Bremsbelaganordnung in einer Richtung vorspannt, die einer Verlagerung entspricht, wie sie aufgrund eines zunehmenden Bremsmoments entgegen der Wirkung einer Niederhaltefeder oder einer anderweitig bestimmten Ausgangsposition auftritt, so dass abrupte geräuschinduzierende Verlagerung vermieden werden können.

Gemäß einer Ausführungsvariante der Erfindung kann vorgesehen sein, dass das Federmittel aus einem Federblech hergestellt ist. Dabei ist es möglich, dass das Federmittel wenigstens einen bogenförmig verlaufenden Federarm aufweist, der über eine Basis an dem Bremsbelagträger befestigt ist. Ferner kann vorgesehen sein, dass zwei oder mehr Federmittel mit ihrer jeweiligen Basis aneinanderliegend an dem Bremsbelagträger angebracht sind, wobei sich ihre Federarme in einem Winkel zueinander erstrecken. Die Basen dieser Federmittel können sozusagen "gestapelt" an dem Bremsbelagträger befestigt werden. Zur Befestigung einer oder mehrerer Basen können eine Schraube, ein Niet, eine (Punkt-)Schweißverbindung oder dergleichen verwendet werden. Die Federarme können je nach Bedarf und gewünschter Kraftausrichtung in vorbestimmter Winkellage zueinander oder/und zum Bremsbelagträger orientiert und an letzterem fixiert werden. Alternativ kann vorgesehen sein, dass das Federmittel wenigstens zwei bogenförmig verlaufende Federarme aufweist, die in einem Winkel von etwa 90° zueinander angeordnet und über eine gemeinsame Basis an dem Bremsbelagträger befestigt sind. Durch Verwendung ein oder mehrerer Federmittel mit mehreren Federarmen lässt sich ein vordefiniertes Kippmoment auf die jeweilige Bremsbelaganordnung ausüben.

Ferner kann vorgesehen sein, dass das Federmittel aus einem Federdraht hergestellt ist. Dabei ist es erfindungsgemäß möglich, dass das Federmittel rückseitige Befestigungszapfen am Bremsbelagträger klammerartig umgreift und mit seinen freien Enden Federarme bildet. Ferner kann erfindungsgemäß vorgesehen sein, dass der Federdraht um den jeweiligen Führungsbolzen herumgeführt ist und sich mit einem elastisch deformierbaren Abschnitt zu einem Befestigungsbereich an dem Bremsbelagträger hin erstreckt, an dem der Federdraht am Bremsbelagträger angebracht ist. Der Federdraht kann etwa die Form eines Ω annehmen, es sind aber auch andersartige Formen denkbar. Wichtig ist, dass sich das Federmittel elastisch deformieren lässt, um seine Federwirkung entfalten zu können.

Zur Anbringung kann vorgesehen sein, dass der Federdraht den Bremsbelagträger an seinem Befestigungsbereich randseitig umklammert.

Die Erfindung betrifft ferner eine Bremsbelaganordnung für eine Scheibenbremse der vorstehend beschriebenen Art, mit einem Bremsbelagträger, an dem ein Bremsbelag angebracht ist, wobei der Bremsbelagträger wenigstens zwei Führungsöffnungen aufweist, die dazu ausgebildet sind, jeweils einen Führungsbolzen aufzunehmen, auf dem sie bei einer Betätigung der Scheibenbremse axial geführt sind, wobei die Bremsbelaganordnung wenigstens ein Federmittel aufweist, das sie in eine einer Kippbewegung relativ zu den Führungsbolzen, die beim Abbremsen der Bremsscheibe aus einem an der Bremsbelaganordnung angreifenden Bremsmoment resultiert, entsprechende Stellung vorspannt.

Die Erfindung wird im Folgenden beispielhaft anhand der beiliegenden Figuren erläutert. Es stellen dar:
- Fig. 1: eine perspektivische Ansicht einer erfindungsgemäßen Scheibenbremse mit entsprechenden Bremsbelaganordnungen;
- Fig. 2a: eine Ansicht einer herkömmlichen Bremsbelaganordnung in der Scheibenbremse gemäß Fig. 1 bei niedrigem Bremsmoment;
- Fig. 2b: eine Ansicht entsprechend Fig. 2a, die die Situation bei hohem Bremsmoment darstellt;
- Fig. 3a: eine Ansicht einer Bremsbelaganordnung gemäß einer ersten Ausführungsvariante der Erfindung;
- Fig. 3b: einen vergrößerten Ausschnitt der Fig. 3a zur Erläuterung des Federmittels;
- Fig. 4 und 5: Ansichten einer Bremsbelaganordnung einer zweiten Ausführungsform der Erfindung;
- Fig. 6 und 7: Ansichten einer Bremsbelaganordnung einer dritten Ausführungsform der Erfindung;
- Fig. 8 und 9: Ansichten einer Bremsbelaganordnung einer vierten Ausführungsform der Erfindung sowie eines Führungsbolzens.

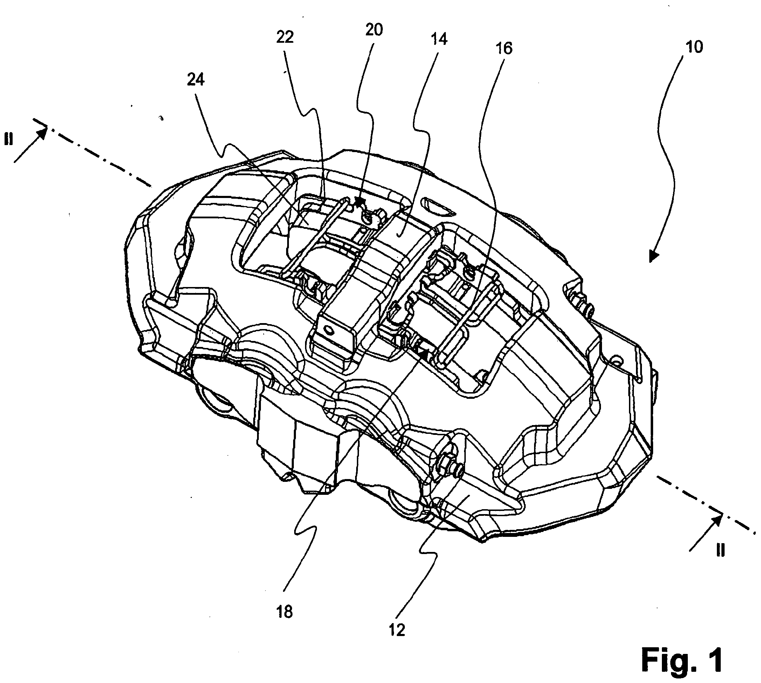

In Fig. 1 erkennt man eine an sich bekannte Scheibenbremse 10 in perspektivischer Ansicht. Diese umfasst ein Gehäuse 12 mit einem Querträger 14. An dem Gehäusequerträger 14 ist eine Belaghaltefederanordnung 16 angeordnet. Diese umgreift den Querträger 14. Die Belaghaltefederanordnung 16, auch Niederhaltefeder genannt, drückt von oben auf Bremsbelaganordnungen 18, 20. Jede Bremsbelaganordnung 18, 20 umfasst einen plattenartigen Bremsbelagträger 22 sowie einen daran angebrachten Bremsbelag 24. Zwischen den beiden Bremsbelaganordnungen 18, 20 läuft in üblicher Weise eine in Fig. 1 nicht gezeigte Bremsscheibe, die drehfest mit einem abzubremsenden Fahrzeugrad verbunden ist.

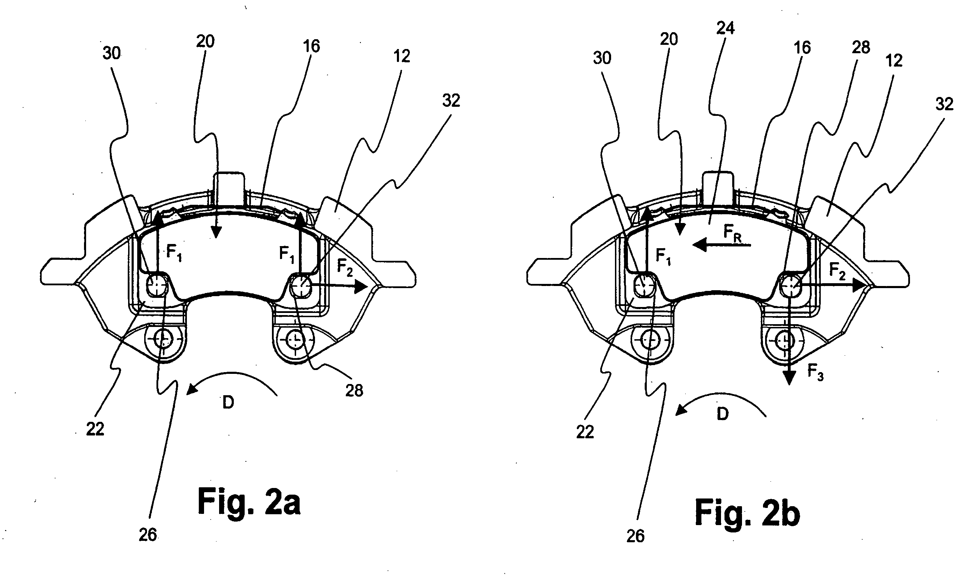

In Fig. 2a erkennt man einen Teilschnitt entsprechend der Schnittlinie II-II durch die Scheibenbremse 10. Man erkennt, dass die Bremsbelaganordnung 20, genauer gesagt der Bremsbelagträger 22, in seinen unteren Eckbereichen jeweils Ausnehmungen 26, 28 aufweist, durch die Führungsbolzen 30, 32 hindurch verlaufen. Die Ausnehmungen 26, 28 sind mit etwas Spiel gegenüber den Führungsbolzen 30, 32 dimensioniert, so dass sich die Bremsbelaganordnung 20 leichtgängig auf den Führungsbolzen 30, 32 verschieben lässt.

In Fig. 2a ist auch die Drehrichtung D angedeutet, in die sich eine abzubremsende Bremsscheibe bei Vorwärtsfahrt des Fahrzeugs dreht. Dementsprechend ist auch das Bremsmoment gerichtet. Aufgrund der Wirkung der Niederhaltefeder 16 wird die Bremsbelaganordnung 20 mit der Kraft F₁ auf die beiden Bolzen 30 und 32 gedrückt, so dass unterhalb der Bolzen ein Spiel zwischen den Bolzen 30 und 32 und dem gegenüberliegenden Bereich der Kante der Ausnehmungen 26 und 28 vorhanden ist. Wird mit der Bremse leicht gebremst, so dass ein relativ geringes Bremsmoment an der Bremsbelaganordnung 20 angreift, so wirkt zusätzlich die Kraft F₂, welche dafür sorgt, dass die Bremsbelaganordnung 20 auch noch rechts an dem Bolzen 30 bzw. 32 anliegt.

Wird nun bei dieser an sich bekannten Anordnung das Bremsmoment erhöht, so ergibt sich ein Kippmoment auf die Bremsbelaganordnung 20, wobei die Wirkung der Niederhaltefeder 16 überwunden wird. Dieses Kippmoment ergibt sich aus der verhältnismäßig großen Reibkraft F_{R}, die durch Anpressen des Bremsbelags 24 der Bremsbelaganordnung 20 erzeugt wird. Aufgrund dieses Kippmoments kommt es zu einer Relativbewegung zwischen der Bremsbelaganordnung 20 und dem Bolzen 32. Genauer gesagt dreht sich aufgrund des Kippmoments entgegen der Wirkung der Niederhaltefeder 16 die Bremsbelaganordnung 20 um den Bolzen 30 herum, so dass unter Aufbrauchen des Spiels zwischen dem Bolzen 32 und der Ausnehmung 28 schließlich der Rand der Ausnehmung 28 am unteren Bereich des Bolzens 32 zur Anlage kommt. Beim Stand der Technik wurde diese Relativverlagerung der Bremsbelaganordnung 20 relativ zu den Bolzen 30, 32 von dem Zustand gemäß Fig. 2a in den Zustand gemäß Fig. 2b ungedämpft und dadurch unter erheblicher Geräuschentwicklung vollzogen.

Die Erfindung trägt dieser Geräuschentwicklung Rechnung, indem eine solche abrupte Verlagerung der Bremsbelaganordnungen auf den Bolzen unterbunden wird.

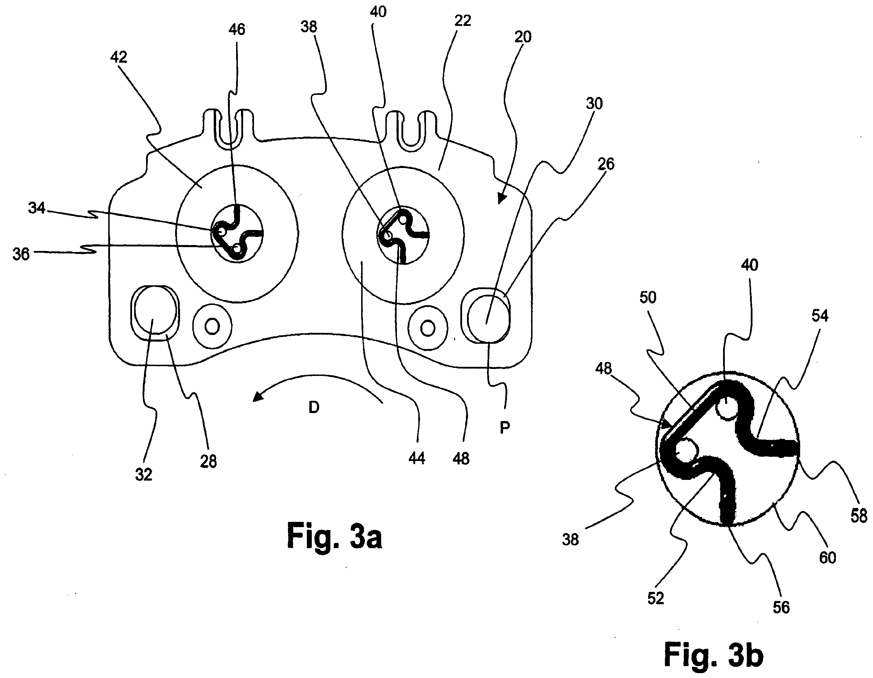

Fig. 3a zeigt eine Ansicht einer Bremsbelaganordnung gemäß der Erfindung auf die vom Bremsbelag abgewandte Seite des Bremsbelagträgers 22. Man erkennt, wie die beiden Ausnehmungen 26 und 28 des Bremsbelagträgers mit Spiel von den beiden Bolzen 30 und 32 durchsetzt sind (nun aufgrund der Gegenansicht spiegelverkehrt zu der Ansicht gemäß Fig. 2a und 2b). An dem Bremsbelagträger 22 sind rückseitig jeweils Befestigungszapfen 34, 36, 38, 40 angebracht. Ferner erkennt man, dass an der Rückseite der Bremsbelagträger jeweils an ihrer Stirnseite hohlzylindrische Kolben 42, 44 angreifen, die in an sich bekannter Weise hydraulisch verlagerbar in dem Gehäuse 12 der Scheibenbremse 10 angeordnet sind. Auf den Zapfen 34, 36 und 38, 40 sind jeweils Federelemente 46, 48 angebracht.

Mit Bezug auf Fig. 3b wird das Federelement 48 im Detail erläutert. Dieses umfasst einen klammerartigen Abschnitt 50, der die beiden Befestigungszapfen 38, 40 umgreift. An den klammerartigen Abschnitt 50 schließen sich zwei Schenkel 52, 54 an, die einen bogenförmigen Verlauf haben und so ähnlich dem griechischen Buchstaben "Ω" eine Einschnürung bilden. Der klammerartige Abschnitt 50 und die beiden Schenkel 52 verlaufen etwa in der Zeichenebene. Die freien Enden 56, 58 des Federelements 48 erstrecken sich aus der Zeichenebene heraus in die stirnseitige Öffnung 60 des Hohlkolbens 44 (siehe Fig. 3a). Die freien Enden 56, 58 liegen unter Vorspannung an der die Öffnung 60 begrenzenden zylindrischen Wand an und spannen so die Bremsbelaganordnung 20 auch in einer unbelasteten oder nur gering belasteten Betriebssituation in eine Stellung vor, die der Stellung gemäß Fig. 2b entspricht. Dies bedeutet, dass es nicht zu einer abrupten Verlagerung im Rahmen des Spiels zwischen dem Bolzen 30, 32 und den Ausnehmungen 26, 28 kommen kann, die beim Stand der Technik zu der unerwünschten Geräuschentwicklung führt. Vielmehr wird diese Verlagerung bereits durch die Vorspannung über die Federelemente 46 und 48 vorweggenommen, so dass es bereits ohne Bremswirkung zu einem Kontakt am Kontaktpunkt P kommt. Dadurch kann erfindungsgemäß der unerwünschten Geräuschentwicklung entgegengetreten werden.

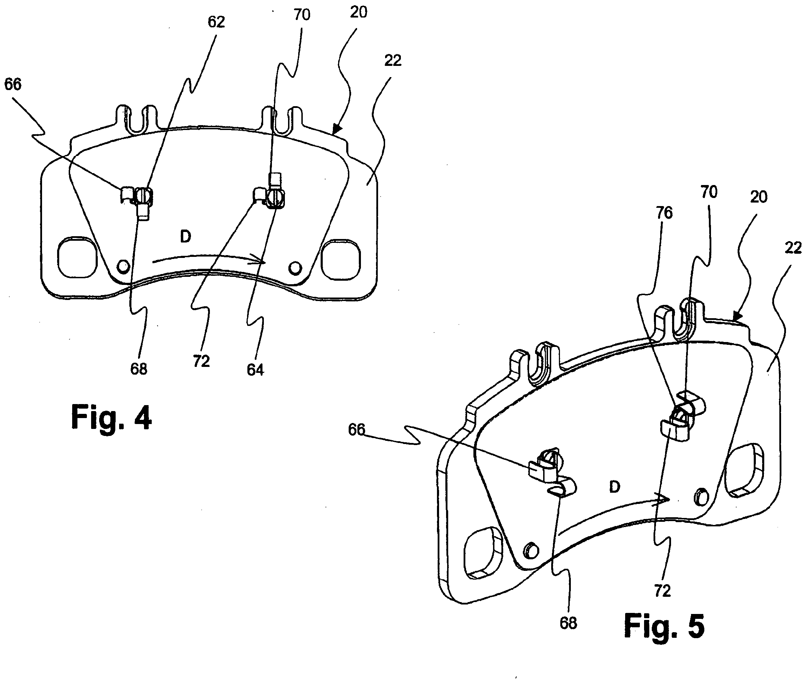

Figuren 4 und 5 zeigen eine alternative Ausführungsform der erfindungsgemäßen Bremsbelaganordnung. Statt der aus einem Federdraht geformten Klammern 46 und 48 werden bei der Ausführungsvariante gemäß Figuren 4 und 5 an der Rückseite des Belagträgers 22 der Bremsbelaganordnung 20 Federelemente 62 und 64 aus Federstahl, beispielsweise aus einem Federstahlbandmaterial, über Schrauben angebracht. Diese Federelemente weisen jeweils zwei Federarme 66, 68 bzw. 70, 72 auf, die paarweise im 90°-Winkel zueinander angeordnet sind und für eine Vorspannung entsprechend der Schilderung zu Figuren 3a und 3b sorgen. Die Federarme 66, 68 bzw. 70, 72 sind ausgehend von einer Basis 74 bzw. 76 jeweils bogenförmig und in sich elastisch federnd ausgebildet. Die Funktionsweise ist dieselbe wie mit Bezug auf Figuren 3a und 3b beschrieben.

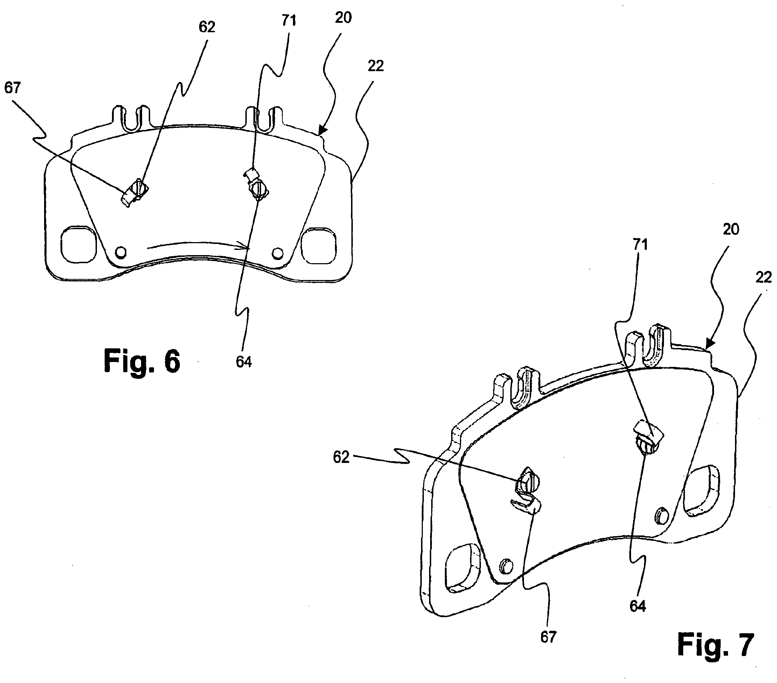

Fig. 6 und 7 zeigen eine weitere Ausführungsvariante der Erfindung.

Diese unterscheidet sich von der Ausführungsform gemäß Fig. 4 und 5 lediglich darin, dass jeweils nur ein bogenförmiger Federarm 67, 71 an jedem Federelement 62, 64 über eine Schraube an dem Bremsbelagträger 22 angebracht ist. Die Ausrichtung der Federarme 67, 71 ist im Vergleich zu der vorangehend beschriebenen Ausführungsform schräg, so dass sich eine resultierende Federkraft ergibt, die in ihrer Richtung der gemäß der Ausführungsform nach Fig. 4 und 5 entspricht.

Ferner sei darauf hingewiesen, dass eine "Mehrarm-Lösung", wie sie in Fig. 4 und 5 gezeigt ist, auch durch Winkelversetztes "Stapeln" mehrerer einarmiger Federelemente gemäß Fig. 6 und 7 möglich ist.

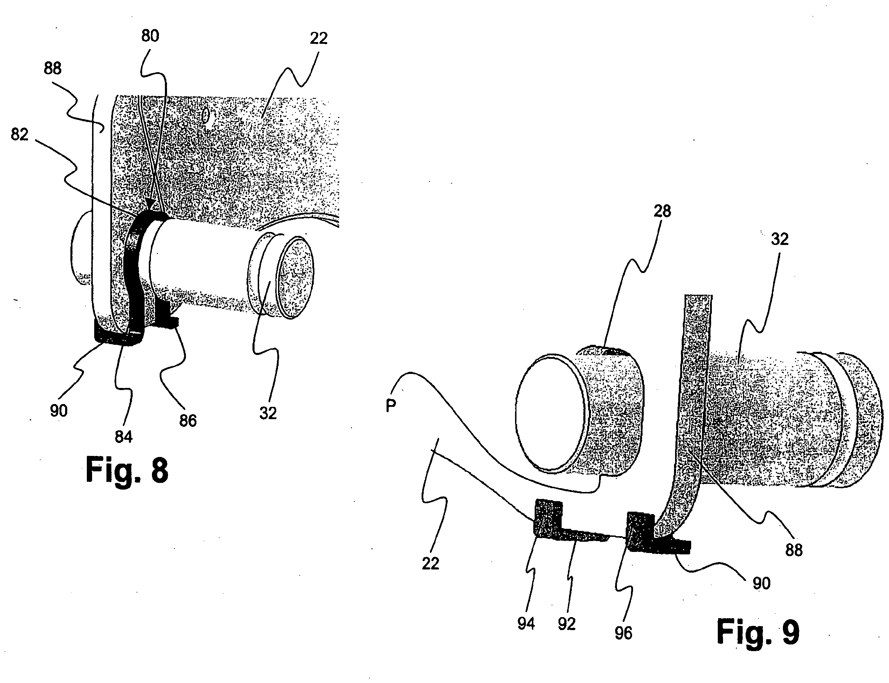

Fig. 8 und 9 zeigen eine vierte Ausführungsvariante der Erfindung.

Dabei erkennt man, dass am Bolzen 32, der in der Ausnehmung 28 geführt ist, ein aus einem Federdraht geformtes Federelement 80 derart angeordnet ist, dass dieses Federelement 80 mit einem Schlaufenabschnitt 82 den Bolzen 32 umschlingt, unterhalb des Bolzens 32 eine Einschnürung vorgesehen ist, von der zwei Schenkel 84, 86 ausgehen, die in an der Stirnkante 88 des Bremsbelagträgers 22 entlang laufende Abschnitte 90, 92 übergehen. Diese Abschnitte 90 bzw. 92 weisen an ihren freien Enden abgewinkelte Greiferabschnitte 94, 96 auf, die den Bremsbelagträger 22 hintergreifen.

In Richtung der Längsachse des Bolzens 32 betrachtet, weist somit die Feder 80 Ωförmige Gestalt auf. Durch den eingeschnürten Übergangsbereich zwischen dem Abschnitt 82 und den Schenkeln 84, 86 ist das Federelement orthogonal zur Längsachse des Bolzens 32 elastische deformierbar, d.h. streckbar, und sorgt so für eine Anzugwirkung zwischen dem Bolzen 32 und dem Bremsbelagträger 22. Diese Anzugwirkung ist so gerichtet, dass der Bolzen 32 an seiner Unterseite im Bereich des Kontaktpunkts P in Anlage mit dem Rand der Ausnehmung 28 kommt.

Auch mit der Ausgestaltung des Federelements 80 gemäß Figuren 8 und 9 lässt sich eine gezielte Vorpositionierung des Bremsbelagträgers 22 relativ zum Bolzen 32 erreichen, so dass abrupte geräuschinduzierende Relativbewegungen zwischen diesen beiden Komponenten unterbunden werden können.

## Patentansprüche

1. Scheibenbremse (10) für eine Kraftfahrzeugbremsanlage mit
- einem rahmenartigen Gehäuse (12),
- wenigstens zwei in dem rahmenartigen Gehäuse (12) aufgenommenen Bremsbelaganordnungen (18, 20), zwischen denen eine um eine Drehachse drehbare Bremsscheibe aufnehmbar ist, und
- wenigstens zwei Führungsbolzen (30, 32), die an dem Gehäuse (12) angebracht sind und an denen wenigstens eine der Bremsbelaganordnungen (18, 20) mit Spiel in axialer Richtung verlagerbar geführt ist,
**dadurch gekennzeichnet, dass** an der auf den Führungsbolzen (30, 32) geführten Bremsbelaganordnung (18, 20) wenigstens ein Federmittel (46, 48) angebracht ist, das diese Bremsbelaganordnung (18, 20) relativ zu den Führungsbolzen (30, 32) in eine einer Kippbewegung, die beim Abbremsen der Bremsscheibe aus einem an der Bremsbelaganordnung (20) angreifenden Bremsmoment resultiert, entsprechende Stellung vorspannt, wobei die Bremsbelaganordnung (18, 20) wenigstens einen Bremsbelagträger (22) und einen auf der der Bremsscheibe zugewandten Seite des Bremsbelagträgers (22) angeordneten Bremsbelag (24) aufweist, wobei das wenigstens eine Federmittel (46, 48) auf der vom Bremsbelag (24) abgewandten Seite des Bremsbelagträgers (22) angeordnet ist.

2. Scheibenbremse (10) nach Anspruch 1,
**dadurch gekennzeichnet, dass** die Bremsbelaganordnung (18, 20) auf den Führungsbolzen (30, 32) über ein verlagerbares Stellglied (40, 42) verlagerbar ist, wobei das wenigstens eine Federmittel (46, 48) an dem Stellglied (40, 42) angreift.

3. Scheibenbremse (10) nach Anspruch 2,
**dadurch gekennzeichnet, dass** das Stellglied (40, 42) wenigstens einen stirnseitig hohl ausgebildeten Bremskolben aufweist, in den das wenigstens eine Federmittel (46, 48) eingreift.

4. Scheibenbremse (10) nach einem der vorangehenden Ansprüche,
**dadurch gekennzeichnet, dass** das Federmittel (46, 48) die Bremsbelaganordnung (18, 20) sowohl in radialer Richtung als auch in Umfangsrichtung bezüglich der Drehachse vorspannt.

5. Scheibenbremse (10) nach einem der vorangehenden Ansprüche,
**dadurch gekennzeichnet, dass** das Federmittel aus einem Federblech hergestellt ist.

6. Scheibenbremse (10) nach Anspruch 5,
**dadurch gekennzeichnet, dass** das Federmittel wenigstens einen bogenförmig verlaufenden Federarm (66, 68, 70, 72; 67, 71) aufweist, der über eine Basis (62, 64) an dem Bremsbelagträger (22) befestigt ist.

7. Scheibenbremse (10) nach Anspruch 6,
**dadurch gekennzeichnet, dass** zwei oder mehr Federmittel mit ihrer jeweiligen Basis aneinanderliegend an dem Bremsbelagträger (22) angebracht sind, wobei sich ihre Federarme in einem Winkel zueinander erstrecken.

8. Scheibenbremse (10) nach Anspruch 6,
**dadurch gekennzeichnet, dass** das Federmittel (46, 48) zwei bogenförmig verlaufende Federarme (66, 68, 70, 72) aufweist, die an der Basis in einem Winkel von etwa 90° angeordnet sind.

9. Scheibenbremse (10) nach einem der Ansprüche 1 bis 4,
**dadurch gekennzeichnet, dass** das Federmittel (46, 48) aus einem Federdraht hergestellt ist.

10. Scheibenbremse (10) nach Anspruch 9,
**dadurch gekennzeichnet, dass** das Federmittel (46, 48) rückseitige Befestigungszapfen (34, 36, 38, 40) am Bremsbelagträger (22) klammerartig umgreift und mit seinen freien Enden Federarme (56, 58) bildet.

11. Scheibenbremse (10) nach Anspruch 9,
**dadurch gekennzeichnet, dass** der Federdraht um den jeweiligen Führungsbolzen (32) herumgeführt ist und sich mit einem elastisch deformierbaren Abschnitt (84, 86) zu einem Befestigungsbereich an dem Bremsbelagträger (22) hin erstreckt, an dem der Federdraht am Bremsbelagträger angebracht ist.

12. Scheibenbremse nach Anspruch 11,
**dadurch gekennzeichnet, dass** der Federdraht den Bremsbelagträger (55) an seinem Befestigungsbereich randseitig umklammert.

## Claims

1. Disk brake (10) for a motor vehicle brake system having
- a frame-like housing (12),
- at least two brake pad arrangements (18, 20), which are accommodated in the frame-like housing (12) and between which a brake disk that is rotatable about an axis of rotation may be accommodated, and
- at least two guide bolts (30, 32), which are mounted on the housing (12) and on which at least one of the brake pad arrangements (18, 20) is guided with play in an axially displaceable manner,
**characterized in that** on the brake pad arrangement (18, 20) guided on the guide bolts (30, 32) at least one spring means (46, 48) is mounted, which biases said brake pad arrangement (18, 20) relative to the guide bolts (30, 32) into a position corresponding to a tilting movement that results during braking of the brake disk from a braking torque acting on the brake pad arrangement (18, 20), wherein the brake pad arrangement (18, 20) comprises at least one brake pad carrier (22) and a brake pad (24) disposed at the side of the brake pad carrier (22) facing the brake disk, wherein the at least one spring means (46, 48) is disposed at the side of the brake pad carrier (22) remote from the brake pad (24).

2. Disk brake (10) according to claim 1,
**characterized in that** the brake pad arrangement (18, 20) is displaceable on the guide bolts (30, 32) by means of a displaceable actuator (40, 42), wherein the at least one spring means (46, 48) acts on the actuator (40, 42).

3. Disk brake (10) according to claim 2,
**characterized in that** the actuator (40, 42) comprises at least one brake piston, which is designed with a hollow end and into which the at least one spring means (46, 48) engages.

4. Disk brake (10) according to claim 1,
**characterized in that** the spring means (46, 48) biases the brake pad arrangement (18, 20) both in radial direction and in peripheral direction relative to the axis of rotation.

5. Disk brake (10) according to claim 1,
**characterized in that** the spring means (46, 48) is manufactured from a spring steel sheet.

6. Disk brake (10) according to claim 5,
**characterized in that** the spring means (46, 48) comprises at least one spring arm (66, 68, 70, 72; 67, 71), which extends in an arc-shaped manner and is fastened by a base (62, 64) to the brake pad carrier (22).

7. Disk brake (10) according to claim 6,
**characterized in that** two or more spring means (46, 48) are mounted by their respective base adjacent to one another on the brake pad carrier (22), wherein their spring arms extend at an angle to one another.

8. Disk brake (10) according to claim 6,
**characterized in that** the spring means (46, 48) comprises two spring arms (66, 68, 70, 72), which extend in an arc-shaped manner and at the base are disposed at an angle of approximately 90°.

9. Disk brake (10) according to claim 1,
**characterized in that** the spring means (46, 48) is manufactured from a spring wire.

10. Disk brake (10) according to claim 9,
**characterized in that** the spring means (46, 48) engages in a clamp-like manner around rear fastening pins (34, 36, 38, 40) on the brake pad carrier (22) and with its free ends forms spring arms (56, 58).

11. Disk brake (10) according to claim 9,
**characterized in that** the spring wire is conveyed around the respective guide bolt (32) and extends with an elastically deformable portion (84, 86) in the direction of a fastening region on the brake pad carrier (22), at which the spring wire is mounted on the brake pad carrier (22).

12. Disk brake (10) according to claim 11, wherein the spring wire is clamped round the edge of the brake pad carrier (22) at the fastening region thereof.

## Revendications

1. Frein à disque (10) pour un système de frein de véhicule automobile, comprenant
- un carter formant bâti (12),
- au moins deux agencements de garniture de frein (18, 20) logés dans ledit carter formant bâti (12) et entre lesquels peut être placé un disque de frein pouvant tourner autour d'un axe de rotation, et
- au moins deux broches de guidage (30, 32) qui sont montées sur le carter (12) et le long desquelles au moins l'un des agencements de garniture de frein (18, 20) est guidé de manière déplaçable avec un jeu dans la direction axiale, **caractérisé en ce qu'**il est monté sur l'agencement de garniture de frein (18, 20) guidé le long desdites broches de guidage (30, 32) au moins un moyen élastique (46, 48) qui précontraint cet agencement de garniture de frein (10) par rapport aux broches de guidage (30, 32) dans une position correspondant à un mouvement de bascule qui, lors du freinage exercé par le disque de frein, résulte d'un couple de freinage agissant sur l'agencement de garniture de frein (18, 20), l'agencement de garniture de frein (20) présentant au moins un support de garniture de frein (22) et une garniture de frein (24) disposée du côté dudit support de garniture de frein (22) tourné vers le disque de frein, ledit au moins un élément élastique (46, 48) étant disposé du côté du support de garniture de frein (22) opposé à la garniture de frein (24).

2. Frein à disque (10) selon la revendication 1,
**caractérisé en ce que** l'agencement de garniture de frein (18, 20) peut être déplacé le long des broches de guidage (30, 32) par l'intermédiaire d'un actionneur (40, 42) déplaçable, ledit au moins un moyen élastique (46, 48) étant en prise avec l'actionneur (40, 42).

3. Frein à disque (10) selon la revendication 2,
**caractérisé en ce que** l'actionneur (40, 42) présente au moins un piston de frein qui est conçu creux sur sa face frontale et dans lequel vient en prise ledit au moins un moyen élastique (46, 48).

4. Frein à disque (10) selon l'une des revendications précédentes,
**caractérisé en ce que** le moyen élastique (46, 48) précontraint l'agencement de garniture de frein (18, 20) aussi bien dans la direction radiale que dans la direction circonférentielle par rapport à l'axe de rotation.

5. Frein à disque (10) selon l'une des revendications précédentes,
**caractérisé en ce que** le moyen élastique (46, 48) est fabriqué à partir d'une tôle élastique pour ressort.

6. Frein à disque (10) selon la revendication 5,
**caractérisé en ce que** le moyen élastique présente au moins un bras élastique (66, 68, 70, 72 ; 67, 71) qui s'étend en forme d'arc et est fixé au support de garniture de frein (22) par l'intermédiaire d'une base (62, 64).

7. Frein à disque (10) selon la revendication 6,
**caractérisé en ce que** deux moyens élastiques ou plus sont placés consécutivement avec leur base respective sur le support de garniture de frein (22), leurs bras élastiques s'étendant les uns par rapport aux autres selon un angle.

8. Frein à disque (10) selon la revendication 6,
**caractérisé en ce que** le moyen élastique (66, 68, 70, 72) présente deux bras élastiques (66, 68, 70, 72) qui s'étendent en forme d'arc et sont disposés à ladite base selon un angle d'environ 90°.

9. Frein à disque (10) selon l'une des revendications 1 à 4,
**caractérisé en ce que** le moyen élastique (46, 48) est fabriqué à partir d'un fil métallique élastique.

10. Frein à disque (10) selon la revendication 9,
**caractérisé en ce que** le moyen élastique (46, 48) entoure à la manière d'un clip des tenons de fixation arrière (34, 36, 38, 40) sur le support de garniture de frein (20) et forme avec ses extrémités libres des bras élastiques (56, 58).

11. Frein à disque (10) selon la revendication 9,
**caractérisé en ce que** le fil métallique élastique passe autour de la broche de guidage (32) respective et s'étend via un segment (84, 86) élastiquement déformable vers une zone de fixation sur le support de garniture de frein (20) par l'intermédiaire de laquelle le bras élastique est monté sur le support de garniture de frein.

12. Frein à disque (10) selon la revendication 11,
**caractérisé en ce que** le fil métallique élastique enserre périphériquement sur le bord le support de garniture de frein (20).
